# EUROPÄISCHE PATENTSCHRIFT

(11) **EP 0 598 079 B1**
(45) Veröffentlichungstag und Bekanntmachung des Hinweises auf die Patenterteilung: **27.12.1996**
(21) Anmeldenummer: 93909956.0
(22) Anmeldetag: 12.05.1993
(51) Int. Cl.: B23Q 3/00, B27G 21/00

(54) **SCHUTZHAUBE FÜR HOLZFRÄSMASCHINEN**
SAFETY HOOD FOR WOOD SHAPING MACHINES
CAPOT DE PROTECTION POUR MACHINES-OUTILS A TRAVAILLER LE BOIS

(30) Priorität: 16.05.1992 DE 4216338
(43) Veröffentlichungstag der Anmeldung: 25.05.1994
(73) Patentinhaber: AIGNER, Georg, D-94419 Reisbach (DE)
(72) Erfinder: AIGNER, Georg, D-94419 Reisbach (DE)
(74) Vertreter: Gustorf, Gerhard, Dipl.-Ing.
(86) Internationale Anmeldenummer: EP9301166
(87) Internationale Veröffentlichungsnummer: WO9323199

(56) Entgegenhaltungen:
- DE-C- 60 707
- FR-A- 1 031 436
- FR-A- 2 543 050
- US-A- 1 715 292

## Beschreibung

Die Erfindung betrifft eine Schutzhaube für Holzfräsmaschinen zum Abdecken eines an einer Spindel befestigten Fräswerkzeuges, das aus einem Maschinentisch vertikal hervorsteht und unter der am Maschinentisch angebrachten Schutzhaube liegt, die aus zwei durch eine Rückwand miteinander verbundenen Seitenwänden, einem Deckel und einem höhenverstellbaren, vorderen Schutzschild besteht, wobei an der Schutzhaube zwei Führungsorgane angebracht sind.

Gegenstand der DE-C 39 31 141 ist eine Späneauffangvorrichtung für eine Tischfräsmaschine zum Fräsen geschweifter Werkstücke aus Holz. Diese Späneauffangvorrichtung hat eine Schutzhaube der oben angegebenen Bauart mit einem transparenten Schutzschild, das in der Höhe verstellt werden kann, um den Durchtrittsspalt für die Werkstücke an deren Höhe anpassen zu können.

In der FR-A 2 543 050 ist eine Schutzeinrichtung für Holzfräsmaschinen gezeigt, die aus einem verstellbar an der Maschine befestigten Schutzschild und einem davon getrennten Druckschuh besteht, der gegen Federkraft schwenkbar gelagert ist.

Der Erfindung liegt die Aufgabe zugrunde, eine Schutzhaube für Holzfräsmaschinen zur Verfügung zu stellen, bei der das Schutzschild nur den in der Höhe unbedingt notwendigen Spalt für das Werkstück freiläßt und dieses gleichzeitig so führt, daß der Fräsvorgang so sicher wie möglich durchgeführt werden kann.

Zur Lösung dieser Aufgabe ist vorgesehen, daß das Schutzschild an den Führungsorganen gegen eine Federkraft vertikal nach oben verschiebbar gelagert ist.

Nach einem weiteren Merkmal besteht jedes Führungsorgan aus einer vertikal ausgerichteten Führungsleiste, die in einen in das Schutzschild eingearbeiteten Vertikalschlitz eingreift.

Die Erfindung hat den erheblichen Vorteil, daß das gesamte Schutzschild gegen die Federkraft nach oben nachgiebig gelagert ist, so daß das Werkstück von oben gegen den Maschinentisch gedrückt und während des Fräsens immer sicher geführt wird.

In Weiterbildung der Erfindung ist vorgesehen, daß die Unterseite des unteren Randes des Schutzschildes wenigstens von einer Seite des mittleren Bereiches ausgehend relativ zum waagrechten Maschinentisch schräg nach oben ansteigt. Auf diese Weise wird ein Einführspalt geschaffen, der ein leichtes und problemloses Einführen des Werkstückes zum Fräswerkzeug hin ermöglicht. Dabei ist es vorteilhaft, wenn die Unterseite des unteren Randes in ihrem mittleren Bereich parallel zum Maschinentisch verläuft und nach beiden Seiten hin schräg nach oben ansteigt.

Weitere Merkmale und Vorteile der Erfindung ergeben sich aus den Patentansprüchen. In der folgenden Beschreibung ist ein Ausführungsbeispiel erläutert, das hilfreich ist zum Verständnis der Erfindung, und in der Zeichnung dargestellt ist.
Es zeigen:
Figur 1 eine Schrägansicht einer an einer Holzfräsmaschine angebrachten Schutzhaube,
Figur 2 die Ansicht des Schutzschildes,

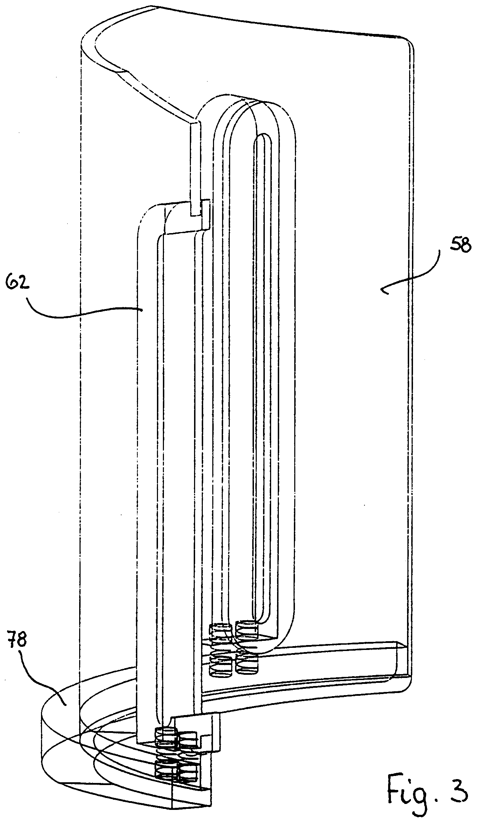

Figur 3 eine teilweise aufgeschnittene Darstellung des Schutzschildes und
Figur 4 einen Vertikalschnitt durch das Schutzschild im Bereich einer Führungsleiste.

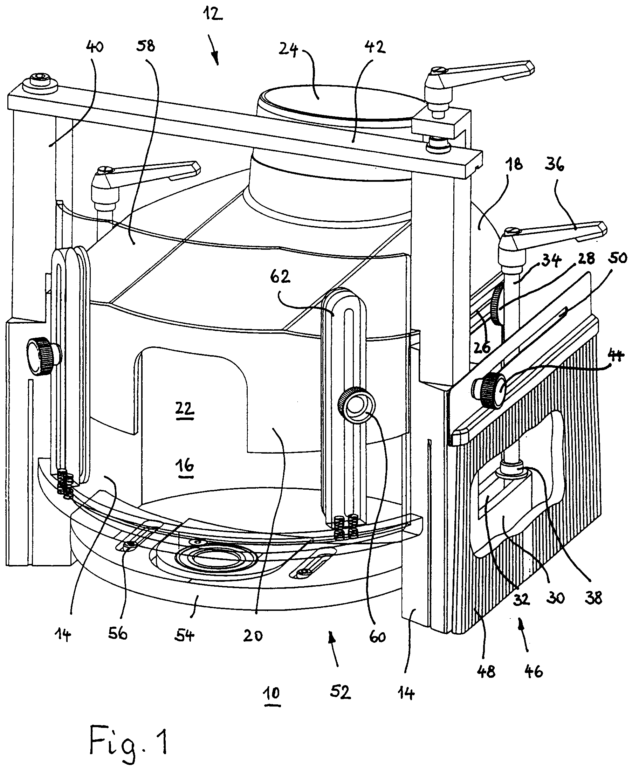

In Figur 1 ist ein waagrechter Maschinentisch 10 einer Holzfräsmaschine angedeutet, auf dem eine Schutzhaube 12 fixiert ist, die den Arbeitsbereich eines nicht weiter dargestellten, an einer Spindel angebrachten Fräswerkzeuges abdeckt. Die Schutzhaube 12 besteht aus zwei Seitenwänden 14, einer diese verbindenden Rückwand 16 und einem Deckel 18, der fest mit der Rückwand 16 verbunden ist. Von dem Deckel 18 steht vorn und seitlich ein Rand 20 nach unten ab, der im vorderen Bereich eine nach unten offene Aussparung 22 hat, welche die Sicht in das Innere der Schutzhaube 12 vergrößert. Der Deckel 18 hat in seinem hinteren Bereich einen Stutzen 24 für den Anschluß einer Absaugvorrichtung.

Die beiden Seitenwände 14 sind unabhängig voneinander in horizontaler Richtung verschiebbar. Hierzu hat jede Seitenwand 14 einen oberen, horizontal verlaufenden Längsschlitz 26, durch den eine Rändelschraube 28 gesteckt ist, welche in eine nicht gezeigte Gewindebohrung am nach unten abstehenden Rand 20 des Deckels 18 eingeschraubt ist. Nach Lösen der Rändelschraube 28 kann die entsprechende Seitenwand 14 an der Schutzhaube 12 nach vorn oder hinten verstellt werden.

Im unteren Bereich hat jede Seitenwand 14 eine nach außen abstehende Stufe 30, in die ein vertikaler Längsschlitz 32 eingearbeitet ist. Durch diesen Längsschlitz 32 ist das Gewindeende einer Schraube 34 gesteckt, die an ihrem oberen Ende einen Klemmhebel 36 trägt, der über dem Deckel 18 liegt. In ihrem mittleren Bereich hat die Schraube 34 einen Bund 38, der sich auf der Oberseite der Stufe 30 abstützt. Das Gewindeende der Schraube 34 ist in eine Gewindebohrung des Maschinentisches 10 eingeschraubt, so daß die Schutzhaube 12 mittels der Schrauben 34 auf diesem fixiert werden kann.

Auf das nach vorn weisende Ende jeder Seitenwand 14 ist eine Tragsäule 40 aufgesteckt. Die beiden Tragsäulen 40 sind durch eine Traverse 42 miteinander verbunden, welche zur Befestigung nicht weiter dargestellter Druck- und Führungsorgane für das Werkstück dienen.

An der in Figur 1 rechten Seitenwand 14 der Schutzhaube 12 ist mittels einer Klemmschraube 44 ein Staubschutzvorhang 46 mit nach unten weisenden Borsten 48 befestigt. Die Klemmschraube 44 greift durch einen horizontalen Längsschlitz 50 des Staubschutzvorhanges 46, so daß dieser in horizontaler Richtung verstellbar ist.

Bei der in Figur 1 gezeigten Anwendung der Schutzhaube 12 ist ein Führungsorgan 52 für das zu bearbeitende Werkstück auf die nicht weiter dargestellte Spindel aufgesetzt. Das Führungsorgan 52 hat im gezeigten Ausführungsbeispiel einen Bogenfräsanschlag 54, dessen Position mit Hilfe von zwei Innensechskantschrauben 56 fixiert werden kann.

Die vordere Öffnung der Schutzhaube 12 ist durch ein höhenbewegliches, durchsichtiges Schutzschild 58 abgedeckt. Das bogenförmige Schutzschild 58 kann mit Hilfe von zwei Feststellschrauben 60 am nach unten abstehenden, vorderen Rand 20 des Deckels 18 in jeder gewünschten Höhenposition fixiert werden.

Zur Befestigung des Schutzschildes 58 am Rand 20 des Deckels 14 dienen zwei vertikal ausgerichtete Führungsleisten 62, die in je einen Vertikalschlitz 64 eingreifen, der seitlich in das Schutzschild 58 eingearbeitet ist. Jeder Vertikalschlitz 64 greift mit seinen beiden Längsrändern in zwei Längsschlitze 66 an den gegenüberliegenden Längskanten der Führungsleiste 62 ein. Durch diese Art der Halterung läßt sich das Schutzschild 12 in vertikaler Richtung relativ zu seinen beiden Führungsleisten 62 bewegen.

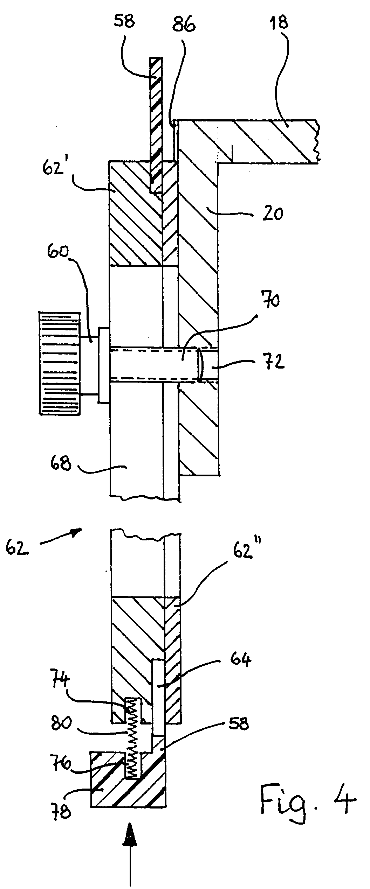

Wie Figur 4 zeigt, ist jede Führungsleiste 62 zweiteilig ausgebildet und hat einen vorderen Teil 62' und einen hinteren Teil 62'', die miteinander verschraubt oder verklebt sind. Bei der Montage wird so vorgegangen, daß zunächst der vordere Teil 62' in den Vertikalschlitz 64 des Schutzschildes 58 eingesetzt wird, worauf der hintere Teil 62'' mit dem vorderen Teil 62' fest verbunden wird.

Jede Führungsleiste 62 hat ein Langloch 68, dessen Längsachse mit derjenigen des Vertikalschlitzes 64 des Schutzschildes 58 übereinstimmt. Durch das Langloch 68 greift der Gewindeschaff 70 der Feststellschraube 60, welcher mit seinem Ende in eine Gewindebohrung 72 des vorderen Randes 20 des Deckels 18 eingeschraubt ist. Nach Lösen der Feststellschraube 60 kann das Schutzschild 58 in der Höhe verstellt und anschließend wieder am vorderen Rand 20 des Deckels 18 festgeklemmt werden. Um eine verkantungsfreie Höhenverstellung für die beiden Führungsleisten 62 zu gewährleisten, greifen diese in vertikale Führungsnuten 86 ein, die in die Vorderseite des Randes 20 des Deckels 18 eingearbeitet sind.

In das untere Ende jeder Führungsleiste 62 sind zwei Sackbohrungen 74 eingearbeitet, denen zwei gegenüberliegende Sackbohrungen 76 entsprechen, die in den nach vorn vorstehenden, unteren Rand 78 des Schutzschildes 58 eingearbeitet sind. In jeweils zwei miteinander fluchtende Sackbohrungen 74 und 76 ist eine Druckfeder 80 eingesetzt. Die insgesamt vier Druckfedern 80 des dargestellten Ausführungsbeispiels drücken das Schutzschild 58 nach unten, bis sich die beiden oberen Enden der Vertikalschlitze 64 an der oberen Verbindungsfläche der beiden seitlichen Längsschlitze 66 jeder Führungsleiste 64 abstützt.

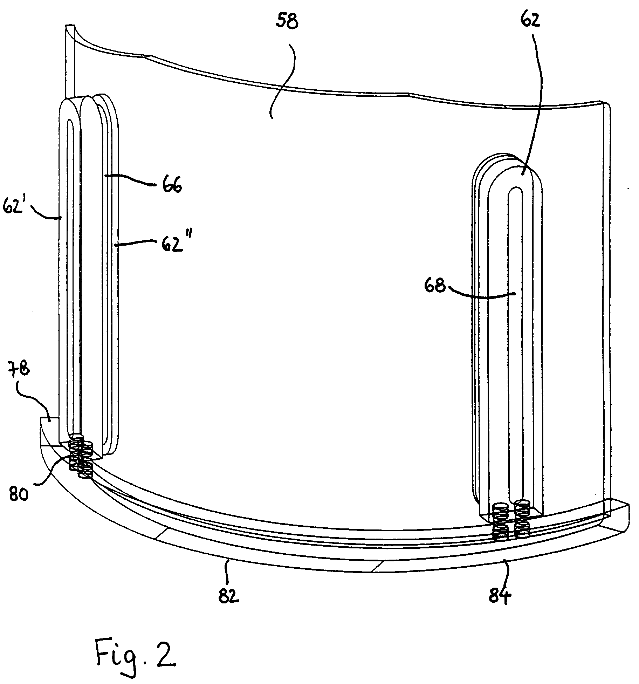

In Figur 2 ist angedeutet, daß die Unterseite des unteren Randes 78 einen mittleren Bereich 82 hat, der parallel zum Maschinentisch 10 ausgerichtet ist. Von diesem mittleren Bereich 82 ausgehend steigt die Unterseite des unteren Randes 78 nach beiden Seiten hin schräg nach oben an, so daß schräge Führungsflächen 84 gebildet werden, die das Einschieben eines Werkstücks erleichtern.

Zum Bearbeiten eines Werkstücks wird das Schutzschild 58 so weit wie möglich nach unten geschoben und mit Hilfe der beiden Feststellschrauben 60 am vorderen Rand 20 des Deckels 18 festgeklemmt. Der Abstand der Unterseite des mittleren Bereiches 82 vom Maschinentisch 10 sollte etwas kleiner als die Werkstückhöhe sein. Beim Zuführen eines Werkstücks für die Bearbeitung drückt dessen vorderes Ende auf die entsprechende, schräge Führungsfläche 84 am unteren Rand 78 des Schutzschildes 58 und drückt dieses dann in Richtung des in Figur 4 eingezeichneten Pfeiles gegen die Kraft der Druckfedern 80 nach oben. Auf diese Weise übt das Schutzschild 58 einen Anpreßdruck auf das Werkstück aus, so daß dieses beim Bearbeiten immer sicher geführt wird.

## Patentansprüche

1. Schutzhaube (12) für Holzfräsmaschinen zum Abdecken eines an einer Spindel befestigten Fräswerkzeuges, das aus einem Maschinentisch (10) vertikal hervorsteht und unter der am Maschinentisch (10) angebrachten Schutzhaube (12) liegt, die aus zwei durch ein Rückwand miteinander verbundenen Seitenwänden, einem Deckel (18) und einem höhenverstellbaren, vorderen Schutzschild (58) besteht, wobei an der Schutzhaube (12) zwei Führungsorgane angebracht sind, dadurch gekennzeichnet, daß das Schutzschild an den Führungsorganen (58) gegen eine Federkraft vertikal nach oben verschiebbar gelagert ist.

2. Schutzhaube nach Anspruch 1, dadurch gekennzeichnet, daß jedes Führungsorgan aus einer vertikal ausgerichteten Führungsleiste (62) besteht, die in einen in das Schutzschild (58) eingearbeiteten Vertikalschlitz (64) eingreift.

3. Schutzhaube nach Anspruch 2, dadurch gekennzeichnet, daß der Vertikalschlitz (64) des Schutzschildes (58) mit seinen beiden Längsrändern in je einen Längsschlitz (66) eingreift, der in die gegenüberliegende Längskante der Führungsleiste (62) eingearbeitet ist.

4. Schutzhaube nach einem der vorhergehenden Ansprüche, dadurch gekennzeichnet, daß jedes Führungsorgan ein Langloch (68) aufweist, durch das eine Feststellschraube (60) zum Festklemmen des Führungsorgans an der Schutzhaube (12) hindurchgreift.

5. Schutzhaube nach einem der Ansprüche 2 bis 4, dadurch gekennzeichnet, daß zwischen das untere Ende der Führungsleiste (62) und den gegenüberliegenden, unteren Rand (78) des Schutzschildes (58) eine Druckfeder (80) eingesetzt ist.

6. Schutzhaube nach einem der vorhergehenden Ansprüche, dadurch gekennzeichnet, daß die Unterseite des unteren Randes (78) des Schutzschildes (58) wenigstens von einer Seite des mittleren Bereiches (82) ausgehend relativ zum waagrechten Maschinentisch (10) schräg nach oben ansteigt.

7. Schutzhaube nach Anspruch 6, dadurch gekennzeichnet, daß die Unterseite des unteren Randes (78) in ihrem mittleren Bereich (82) parallel zum Maschinentisch (10) verläuft und nach beiden Seiten hin schräg nach oben ansteigt.

## Claims

1. A safety hood (12) for wood-shaping machines for covering a cutting tool which is secured to a spindle and which projects vertically from a machine stand (10) and is situated under the safety hood (12) mounted on the machine stand (10), the safety hood (12) comprising two lateral walls connected to each other by a rear wall, a cover (18) and a vertically adjustable front safety shield (58), wherein two guide members are mounted on the safety hood (12), **characterized in that** the safety shield (58) is mounted on the guide members so as to be displaceable vertically upwards against spring force.

2. A safety hood according to Claim 1, **characterized in that** each guide member comprises a vertically orientated guide strip (62) which engages in a vertical slot (64) formed in the safety shield (58).

3. A safety hood according to Claim 2, **characterized in that** the vertical slot (64) in the safety shield (58) engages with its two longitudinal edges in one longitudinal slot (66) in each case, which is formed in the opposite longitudinal edge of the guide strip (62).

4. A safety hood according to one of the preceding Claims, **characterized in that** each guide member comprises an elongate hole (68) through which a locking screw (60) engages in order to clamp the guide member to the safety hood (12).

5. A safety hood according to one of Claims 2 to 4, **characterized in that** a compression spring (80) is inserted between the lower end of the guide strip (62) and the opposite lower edge (78) of the safety shield (58).

6. A safety hood according to one of the preceding Claims, **characterized in that** the underside of the lower edge (78) of the safety shield (58), starting at least from one side of the middle region (82), ascends obliquely upwards relative to the horizontal machine stand (10).

7. A safety hood according to Claim 6, **characterized in that** the underside of the lower edge (78) extends parallel to the machine stand (10) in its middle region (82) and ascends obliquely upwards towards the two ends.

## Revendications

1. Capot de protection (12) pour machines à travailler le bois, destiné à couvrir un outil de fraisage fixé à une broche, ce-dernier dépassant verticalement d'un plateau de machine (10) et se trouvant sous le capot de protection (12) monté sur le plateau de la machine (10), lequel capot se compose de deux parois latérales reliées entre elles par une paroi postérieure, d'un couvercle (18) et d'un écran de protection (58) antérieur réglable en hauteur, deux organes de guidage étant fixés sur le capot de protection (12), caractérisé en ce que l'écran de protection (58) est monté sur les organes de guidage avec possibilité de translation verticale vers le haut à l'encontre d'un effet de ressort.

2. Capot de protection selon la revendication 1, caractérisé en ce que chaque organe de guidage se compose d'une bande de guidage (62) orientée dans le sens vertical, qui se met en prise dans une fente verticale (64) ménagée dans l'écran de protection (58).

3. Capot de protection selon la revendication 2, caractérisé en ce que la fente verticale (64) de l'écran de protection (58) se met en prise par chacun de ses deux bords longitudinaux dans une fente longitudinale (66) ménagée dans le bord longitudinal opposé de la bande de guidage (62).

4. Capot de protection selon l'une quelconque des revendications précédentes, caractérisé en ce que chaque organe de guidage présente un trou allongé (68) à travers lequel passe une vis de fixation (60) destinée à serrer l'organe de guidage sur le capot de protection (12).

5. Capot de protection selon l'une quelconque des revendications 2 à 4, caractérisé en ce qu'un ressort de compression (80) est installé entre l'extrémité inférieure de la bande de guidage (62) et le bord inférieur (78) opposé de l'écran de protection (58).

6. Capot de protection selon l'une quelconque des revendications précédentes, caractérisé en ce que la face inférieure du bord inférieur (78) de l'écran de protection (58) monte en oblique vers le haut à partir d'au moins un côté de la zone centrale (82) par rapport au plateau (10) horizontal de la machine.

7. Capot de protection selon la revendication 6, caractérisé en ce que la face inférieure du bord inférieur (78) est parallèle au plateau de la machine (10) dans sa zone centrale (82) et monte en oblique vers le haut des deux côtés.
